(19)

**Europäisches Patentamt**

**European Patent Office**

**Office européen des brevets**

(11)  **EP 3 052 355 B1**

(12) **EUROPEAN PATENT SPECIFICATION**

(45) Date of publication and mention
of the grant of the patent:
**27.05.2020 Bulletin 2020/22**

(51) Int Cl.:
**G08G 1/00** *(2006.01)*    **G05D 1/02** *(2020.01)*
**B60W 30/16** *(2020.01)*

(21) Application number: **14848197.1**

(22) Date of filing: **26.09.2014**

(86) International application number:
**PCT/SE2014/051114**

(87) International publication number:
**WO 2015/047176 (02.04.2015 Gazette 2015/13)**

(54) **A SYSTEM AND A METHOD FOR VEHICLE PLATOONS COMPRISING AT LEAST TWO VEHICLES.**

SYSTEM UND VERFAHREN FÜR FAHRZEUGPLATOONS MIT MINDESTENS ZWEI FAHRZEUGEN

UN SYSTÈME ET UN PROCÉDÉ POUR DES PELOTONS DE VÉHICULES COMPRENANT AU MOINS DEUX VÉHICULES.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2013 SE 1351127**

(43) Date of publication of application:
**10.08.2016 Bulletin 2016/32**

(73) Proprietor: **Scania CV AB**
**151 87 Södertälje (SE)**

(72) Inventors:
• **ALAM, Assad**
**S-121 31 Enskededalen (SE)**
• **LIANG, Kuo-Yun**
**S-127 45 Skärholmen (SE)**

• **PETTERSSON, Henrik**
**S-141 73 Segeltorp (SE)**
• **MÅRTENSSON, Jonas**
**S-187 33 Täby (SE)**
• **JOHANSSON, Karl Henrik**
**S-181 61 Lidingö (SE)**

(74) Representative: **Scania CV AB**
**Patents, GP 117kv**
**151 87 Södertälje (SE)**

(56) References cited:
| | |
|---|---|
| **EP-A1- 0 884 666** | **EP-A1- 0 884 666** |
| **WO-A1-2013/034161** | **US-A- 6 032 097** |
| **US-A- 6 115 652** | **US-A1- 2010 049 374** |
| **US-A1- 2011 098 922** | **US-A1- 2011 098 922** |
| **US-A1- 2013 030 606** | **US-A1- 2013 116 861** |

**Description**

Technical area

The present invention relates to a system and a method for vehicle platoons. The vehicle platoon comprises at least one lead vehicle and one additional vehicle, each of which has a positioning unit and a unit for wireless communication.

Background to the invention

The intensity of traffic is high on major roads in Europe, and it is expected to increase. The increased transport of people and goods not only gives rise to traffic problems in the form of traffic queues, it also requires ever-increasing amounts of energy, which eventually gives rise to the emission of, for example, greenhouse gases. One possible contribution to solving these problems is to allow vehicles to be driven closer together in what are known as "vehicle platoons". The term "vehicle platoon" is here used to denote a number of vehicles with short distances between them, being driven as a single unit. The short distances lead to it being possible for more traffic to use the road, and the energy consumption for an individual vehicle will be reduced since the drag is reduced. The vehicles in the vehicle platoon are driven with at least one of an automated control of the speed of the vehicle and an automated control of its direction. This leads to vehicle drivers such as truck drivers being subject to a reduced load, accidents based on erroneous human decisions being reduced, and the possibility of reducing fuel consumption. Studies show that the fuel consumption of the leading vehicle in the vehicle platoon can be reduced by 2 to 10%, and that of the following vehicle by 15 to 20%, from the fuel consumption of a vehicle driving alone. This is the case in conditions in which the distance between the vehicles is 8-16 metres and the speed at which they travel is 80 km/h. The reduced fuel consumption gives a corresponding reduction in the emission of $CO_2$.

Drivers are already using this well-known fact, which has a reduced traffic safety as a consequence. One fundamental question related to vehicle platoons is how the time gap between vehicles can be reduced from the recommended 3 seconds to a value between 0.5 and 1 second, without affecting traffic safety. With distance sensors and cameras, the reaction time of the driver can be eliminated. This is a type of technology that is already being used today by systems such as ACC (adaptive cruise control) and LKA (lane-keeping assistance). One limitation, however, is that distance sensors and cameras require a clear view of the target, and this makes it difficult to detect events that lie more than a pair of vehicles ahead in the queue. A further limitation is that the cruise-control system cannot act proactively, i.e., the cruise-control system cannot react to events that occur further in advance in the traffic that are going to affect the traffic rhythm.

One possibility to enable vehicles to act proactively is to arrange that the vehicles communicate and exchange information. One development of the IEEE-standard 802.11 for WLAN (wireless local area networks) known as "802.11p" makes possible the wireless transfer of information between vehicles, and between vehicles and infrastructure. Different types of information, such as vehicle parameters and strategies, can be transmitted to and from the vehicles. The development of communication technology, thus, has made it possible to design vehicles and infrastructure that can interact and act proactively. Vehicles can be controlled as a unit and thus a shorter distance between them, and better global traffic flow, are made possible.

Many vehicle are today equipped with a cruise-control system in order to make it easier for the driver to drive the vehicle. The desired speed can in this case be set by the driver by, for example, a regulator in the dashboard, and a cruise-control system in the vehicle subsequently influences a control system such that it accelerates and brakes the vehicle as appropriate, in order to maintain the desired speed. If the vehicle is equipped with an automatic gear-change system, the gear in which the vehicle is being driven is changed, such that the vehicle can maintain the desired speed.

When the cruise-control system is used in hilly terrain, the cruise-control system will attempt to maintain the preset speed along uphill sections. This sometimes has the consequence that the vehicle accelerates over the top of the hill and possibly into a subsequent downhill section such that it subsequently must be braked in order not to exceed the preset speed, and this constitutes a manner of driving a vehicle that is wasteful of fuel. By varying the speed of the vehicle in hilly terrain, fuel can be saved, compared with the fuel consumption of a vehicle with a conventional cruise-control system. If the topology that lies ahead is made known through the vehicle having map data and positioning equipment, such systems can be made more robust, and they can change the speed of the vehicle before events have occurred. This is achieved with what is known as "look-ahead cruise control", abbreviated as "LAC".

The situation, however, becomes more complex when a fuel-optimal driving strategy is to be drawn up for a complete vehicle platoon. Additional aspects must be considered, such as retention of the optimal distance, physically possible speed profiles for all vehicles with different masses and engine capacities. One additional aspect for a vehicle platoon during travel through varying topography is that the leading vehicle, when it has lost speed in an uphill section, resumes its preset speed after the hill. The following vehicles, which then are still present in the uphill section, will be forced to accelerate while travelling uphill, which is not fuel-efficient. Nor is it always possible, which means that gaps will be created in the vehicle platoon, which gaps must, in turn, be closed. This creates oscillations in the vehicle platoon. A similar behaviour is observed also in downhill sections, when the leading vehicle starts to accelerate in the downhill section due to its large mass. The following vehicles are in this case compelled to accelerate before they reach the downhill section, since they attempt to maintain constant the distance to the vehicles in front. After the downhill section, the leading vehicle starts to decelerate in order to return to the preset speed. The following vehicles, which then are still present in the downhill section, will be compelled to brake in order to avoid causing a collision, which braking is not fuel-efficient.

A similar problem arises when driving around bends. In the case of an individual vehicle, it is possible to calculate the maximum speed that a vehicle should have through the bend, based on various factors such as driver comfort, centre of gravity, risk of tipping, the topology, etc., through the use of a predictive cruise-control system. It is, however, not obvious how a vehicle platoon should take the bend. In the case in which the leading vehicle needs to decelerate from its preset speed in order to be able to take the bend, it will return to its preset speed after the bend. The following vehicles, which then are still present in the bend, will be compelled to accelerate in the bend, which may not be possible without exposing the vehicles to risks, such as the risk of leaving the carriageway.

One possible solution to the problem described above is to draw up a regulatory strategy for the complete vehicle platoon that takes the approaching varying topography into consideration. In order to achieve the possible benefits with respect to improved fuel economy for vehicle platoons in varying topography, it is necessary to rely on map data. Map data, however, are not always exact with currently available measuring instruments, and often contain uncertainties and errors. If the map data are erroneous, it is possible that the wrong speed will be held by the vehicle at the wrong time, and the expected improvement in fuel economy will be less. In the same way, the position specification of the vehicle from its positioning equipment may be erroneous due to insufficient accuracy, etc.

EP0884666A1 describes a vehicle control system that manages the problem with insufficient accuracy in GPS data. The determination by the vehicle of its position using the GPS system is corrected with corrective data from a GPS reference station in a base station with a known position. In this way, errors such as satellite timing errors, orbit errors, etc., can be corrected such that automatic control of a vehicle can be achieved. The vehicle, however, requires to be at least partially controlled from the base station.

US 6032097A discloses a vehicle platoon control system which is capable of controlling the speeds of a platoon of motor vehicles, particularly on a road for automatically driven or autonomous motor vehicles.

The object of the invention is to provide a system that can independently correct errors in at least one of map data and positional data, and in this way make possible a fuel-efficient regulation of a vehicle platoon during variations in the design of the approaching carriageway, such as at least one of topography and the need to drive around bends.

Summary of the invention

According to one aspect, the object is at least partially achieved through a system for a vehicle platoon. The vehicle platoon comprises at least one lead vehicle and one additional vehicle, each of which has a positioning unit and a unit for wireless communication. The system comprises a profile unit configured to determine a profile for at least one vehicle in the vehicle platoon with the aid of positional data and map data for a road ahead, which profile contains at least one property of the road ahead. The system is characterised by an analysis unit that is configured to determine at least one actual property of the road ahead, to determine correctional data $\beta$ based on at least one actual property of the road ahead and at least one property of the profile; wherein the actual property and the at least one property of the profile concern the same property, and to pass the correctional data $\beta$ to at least one vehicle $f_k$ in the vehicle platoon.

The system may be implemented in, for example, the lead vehicle. The lead vehicle can in this way be used as a sensor or measurement probe for other vehicles in the vehicle platoon. If the lead vehicle detects errors in, for example, the map data, this information can be transmitted to the vehicles behind. The vehicles behind can then correct errors in data and driving strategies, and can, for example, start the strategy on an earlier or later occasion. The lead vehicle can correct its own data and driving profile through feedback concerning the error. The correction may, for example, be initiated when the lead vehicle discovers that the desired speed has not been achieved when it starts to drive over, for example, a hill.

An optimal fuel use and cooperative driving that can be carried out are achieved through the invention. The error that has been observed can also be reported to a central unit, and the error can be corrected for all vehicles on the road. According to a second aspect, the object is at least partially achieved through a method for a vehicle platoon that comprises at least one lead vehicle and one additional vehicle, each of which has a positioning unit and a unit for wireless communication. The method comprises to determine a profile for at least one vehicle in the vehicle platoon with the aid of positional data and map data for a road ahead, whereby the profile contains at least one property of the road ahead. The method is characterised by to determine at least one actual property of the road ahead, to determine correctional data $\beta$ based on the at least one actual property of the road ahead and the at least one property of the profile, whereby the actual property and the at least one property of the profile concern the same property, and to pass the correctional data $\beta$ to at least one vehicle $f_k$ in the vehicle platoon.

According to a third aspect, the object is at least partially achieved through a computer program P at a system, where the said computer program P comprises program code in order to cause the system to carry out any one of the method steps that are described in this application.

According to a fourth aspect, the object is at least partially achieved through a computer program product comprising a program code stored on a medium that can be read by a computer in order to carry out any one of the method steps described in this application.

Preferred embodiments are described in the dependent claims and in the detailed description.

Brief description of the attached drawings

The invention will be described below with reference to the attached drawings, of which:

Figure 1    illustrates an example of a vehicle platoon.
Figure 2    illustrates schematically a vehicle in the vehicle platoon.
Figure 3    shows a system according to one embodiment.
Figure 4    illustrates one example of a road horizon.
Figure 5    shows an example of a vehicle platoon at the start of a hill.
Figure 6    shows an example of a vehicle platoon at the start of a bend.
Figure 7    shows a flow diagram according to one embodiment of the invention.

Detailed description of preferred embodiments of the invention

*Definitions*

LAC (look-ahead cruise control): a cruise-control system that uses information about the topography of the road ahead, and calculates an optimal driving profile in the form of a speed trajectory for a vehicle. Also known as a "predictive cruise-control system".

LAP (look-ahead cruise control for platoons): a cooperative cruise-control system that uses information about the topography of the road ahead, and calculates an optimal driving trajectory for all vehicles in a vehicle platoon. Also known as a "predictive cruise-control system for vehicle platoons". The control strategy is determined by, for example, dynamic programming.

$v_k$: the speed of vehicle $f_k$ in the vehicle platoon with N vehicles.

$d_{k,k+1}$ - the distance between vehicle $f_k$ and the vehicle behind it $f_{k+1}$ in the vehicle platoon.

$a_k$: the gradient at vehicle $f_k$.

V2V-communication (vehicle-to-vehicle): wireless communication between vehicles, also known as vehicle-to-vehicle communication.

V2I-communication (vehicle-to-infrastructure): wireless communication between vehicles and infrastructure, such as road junctions and computer systems.

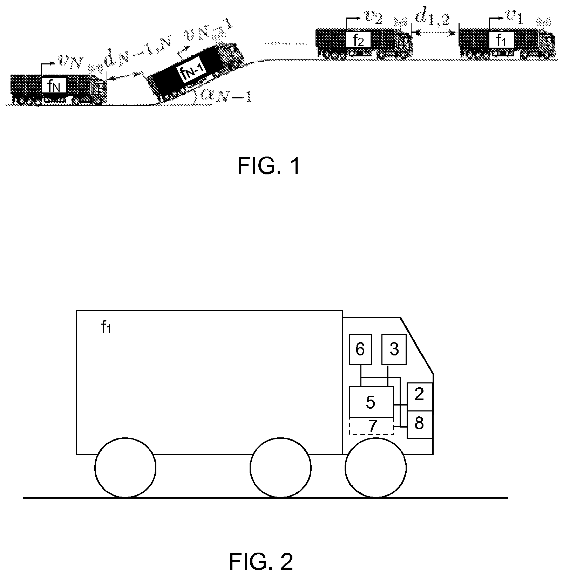

Figure 1 shows a vehicle platoon with N heavy vehicles $f_k$ that is proceeding up a hill with small spaces $d_{k,k+1}$ between the vehicles. The vehicles in the vehicle platoon are driven with at least one of an automated control of the speed and an automated control of its direction. The gradient at vehicle $f_k$ when it drives up the hill is shown as $a_k$. Each vehicle $f_k$ is equipped with a receiver and a transmitter for wireless signals, partially shown with an antenna. The vehicles $f_k$ in the vehicle platoon can thus communicate with each other through V2V-communication or through other means such as, for example, mobile communication units, through an application in a communication unit, or through a server. They can communicate also with infrastructure in the form of V2I-communication. The communication can pass, for example, from one vehicle and through a road junction to a second vehicle. The different vehicles $f_k$ have different masses $m_k$. The vehicle platoon has a lead vehicle, i.e. the first vehicle $f_1$. Each vehicle $f_k$ in the vehicle platoon has, for example, a unique vehicle identity and a vehicle platoon identity that is common for the complete vehicle platoon, in order to be able to maintain knowledge of which vehicles are members of the vehicle platoon. Data that are transmitted wirelessly between the vehicles in the vehicle platoon can be tagged with these identities such that the vehicle of origin of the data that are received can be determined.

Figure 2 shows an example of a vehicle $f_k$ in the vehicle platoon, here the lead vehicle $f_1$, and illustrates how it may be equipped. The vehicle $f_k$ is equipped with a positioning unit 2 that can determine the position of the vehicle $f_k$. The positioning unit 2 may be, for example, configured to receive signals from a global positioning system such as GNSS (Global Navigation Satellite System), for example GPS (Global Positioning System), GLONASS, Galileo or Compass. Alternatively, the positioning unit 2 may be configured to receive signals from, for example, one or several detectors in the vehicle that measure relative distances to, for example, a road junction, vehicles in the surroundings, or similar entities, with known positions. Based on the relative distances, the positioning unit 2 can subsequently determine the position of the vehicle $f_k$. A detector may be configured also to detect a signature in, for example, a road junction, whereby the signature represents a certain position. The positioning unit 2 may in this case be configured to determine its position through detection of the signature. The positioning unit 2 may instead be configured to determine the signal strength of one or several signals from several base stations or road junctions, or base stations and road junctions, etc., with known positions, and in this way to determine the position of the vehicle $f_k$ by triangulation. Of course, the technologies described above may be combined in order to determine the position of vehicle $f_k$. The positioning unit 2 is configured to generate a positioning signal that contains the position of the vehicle $f_k$, and to transmit this signal to one or several units in the vehicle $f_k$. The vehicle $f_k$ is, as has been mentioned above, equipped also with a unit 3 for wireless communication. The unit 3 is configured to function as receiver and transmitter of wireless signals. The unit 3 can receive at least one of wireless signals from other vehicles and wireless signals from infrastructure around the vehicle $f_k$, and it can transmit at least one of wireless signals to other vehicles and wireless signals to infrastructure around the vehicle $f_k$. The wireless signals can comprise vehicle parameters from other vehicles, for example their mass, torque developed, speed, and also more complex information such as, for example, the currently used driving profile, driving strategy, etc. The wireless signals may contain also information about the surroundings, such as the gradient $\alpha$ of the road, the radius of curvature r, etc. The vehicle $f_k$ may be equipped also with one or several detectors 8 in order to detect the surroundings, for example a radar unit, a laser unit, a gradient gauge, acceleration gauge, steering wheel measure, a gyro, etc. These detectors are generally labelled in Figure 2 as a detector unit 8, but they may be constituted by several different detectors located at different locations in the vehicle $f_k$. The detector unit 8 is configured to determine a parameter, such as a relative distance, speed, gradient, longitudinal acceleration, lateral acceleration, rotation, steering wheel position, engine torque, etc., and to generate a detector signal that contains the parameter. The detector unit 8 is further configured to transmit the detector signal to one or several units in the vehicle $f_k$. The vehicle $f_k$ is equipped also with a map unit 6 that can provide map information about the road ahead. The driver may, for example, specify a final position and the map unit 6 can then, given that it has knowledge of the current position of the vehicle, provide relevant map data about the road ahead between the current position and the final destination.

The vehicle $f_k$ communicates internally between its various units through, for example, a bus, such as a CAN bus (controller area network), which uses a message-based protocol. Examples of other communication protocols that can be used are TTP (time-triggered protocol), Flexray, etc. Signals and data as described above can in this way be exchanged between various units in the vehicle $f_k$. Signals and data can instead be transferred in a wireless manner, for example, between the various units.

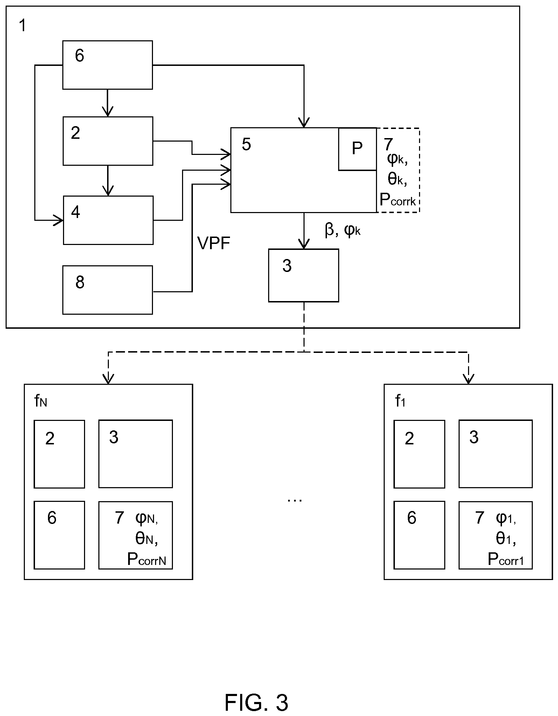

Figure 2 shows also an analysis unit 5 and a control unit 7 that can be components of a system 1 according to the invention. Figure 3 shows an example of the system 1 that can be used for a vehicle platoon. The system 1 acts through, for example, the first vehicle $f_1$ in the vehicle platoon, which acts as a measuring instrument for the vehicle platoon. In such a manner data, etc., can be corrected for the vehicles in the vehicle platoon in order to be able to drive the vehicles in a fuel-efficient manner according to a common driving strategy for the complete vehicle platoon.

The system 1 will be described in detail below with reference to Figures 3-6. The system 1 comprises a profile unit 4 that is configured to determine a profile for at least one vehicle in the vehicle platoon with the aid of positional data and map data for a road ahead. The profile contains at least one property of the road ahead. The system 1 further contains an analysis unit 5 that is configured to determine at least one actual property of the road ahead, to determine correctional data $\beta$ based on the at least one actual property of the road ahead and the at least one property of the profile, whereby the actual property and the at least one property of the profile concern essentially the same property, and to pass the correctional data $\beta$ to at least one vehicle $f_k$ in the vehicle platoon. The system 1 may be implemented in, for example, the lead vehicle $f_1$. The lead vehicle $f_1$ can then use correctional data $\beta$ to update either its own position or its own map data, or both its own position and its own map data, and can generate at least one of a corrected position $p_{corr}$ and corrected map data $\theta$. A control unit 7 in the system 1 may, for example, be configured to be passed the correctional data $\beta$ and thus to correct data. The correctional data $\beta$ may be also indicated to the driver of the vehicle in order to make him or her aware that the data contain errors. According to one embodiment, the analysis unit 5 is configured to generate a correctional signal that indicates the correctional data $\beta$, and to transmit the correctional signal to at least one vehicle $f_k$ in the vehicle platoon. Other vehicles in the vehicle platoon can in this way correct their data independently. The system 1 is, according to one embodiment, located in an external unit, such as a road junction or a central unit.

In order to achieve the possible benefits with respect to improved fuel economy for vehicle platoons in varying topography, it is necessary to rely on map data. The profile unit 4 uses map data from the map unit 6 with existing, predetermined map data in order to determine a profile for the vehicle. Given knowledge of the current position of the vehicle and a final destination, the profile unit can specify a road ahead for the vehicle with direct properties of the road according to the map data at positions according to the map data. The direct properties are, for example, the gradient $\alpha$ or the radius of curvature r. This road ahead with its properties can be denoted by the term "the horizon" of the vehicle.

The horizon is typically approximately 2 km long, with its starting point at the vehicle. The horizon may also specify positions and properties that the vehicle $f_k$ has already passed. The profile unit 4 may be configured also to determine a predictive cruise-control strategy for the vehicle. The profile unit 4 can in this case be configured to determine a profile for the vehicle that contains at least one indirect property of the road ahead based on a predicted dynamic behaviour of the vehicle along the road ahead. An indirect property is, for example, any one of a predicted speed v and a predicted acceleration a for the vehicle $f_k$. A profile with a predicted speed v or acceleration a for the vehicle $f_k$ is also known as a "driving profile" for the vehicle $f_k$. Examples of how such a driving profile can be determined will be explained below. The analysis unit 5 is, according to this embodiment, configured to determine at least one actual indirect property of the road ahead based on an actual dynamic behaviour of the vehicle, and to determine correctional data $\beta$ based on the at least one actual indirect property of the road ahead and the at least one indirect property of the profile.

A predicted dynamic behaviour of the vehicle may be, for example, that the vehicle is to have a maximum rate of fuel injection at a certain position in the profile. This maximum rate of fuel injection is to give rise to a certain desired predicted speed v for the vehicle $f_k$ at a certain position p along the given road ahead according to map data and the position that has been specified, in order to drive the vehicle $f_k$ in a desired manner. In the case in which the actual speed of the vehicle is lower at position p than the predicted speed v, the true hill started earlier that had been determined through map data and the positioning. Thus the vehicle has started the hill at an earlier occasion than predicted, and thus starts to loose speed earlier. It is possible in this way to detect that there are errors in at least one of the map data and the specification of position. The dynamic behaviour of the vehicle can be predicted through, for example, dynamic programming algorithms. A dynamic programme algorithm may, for example, examine a number of conceivable solutions and select the best, according to certain criteria. It is possible in this way to determine a profile with several target speeds $v_{ref}$ at different positions in the profile. The actual indirect property of vehicle $f_k$ may then be the actual measured speed $v_f$ of the vehicle along the road, which suddenly does not agree with the speed $v_{ref}$ that it should have, according to the profile. By, for example, determining the location in the profile at which the actual speed $v_f$ of the vehicle is essentially in accordance with the predicted speed $v_{ref}$, it is possible to determine correctional data $\beta$. The term "essentially in accordance with" means, for example, that $v_f$ and $v_{ref}$ are in accordance within a certain interval. A property of the road ahead may, thus, be either a direct property such as, for example, a gradient or radius of curvature, or it may be an indirect property such as a speed or acceleration that indirectly gives information about the direct properties of the road ahead, based on how it is desired that the vehicle is to be driven along the road ahead.

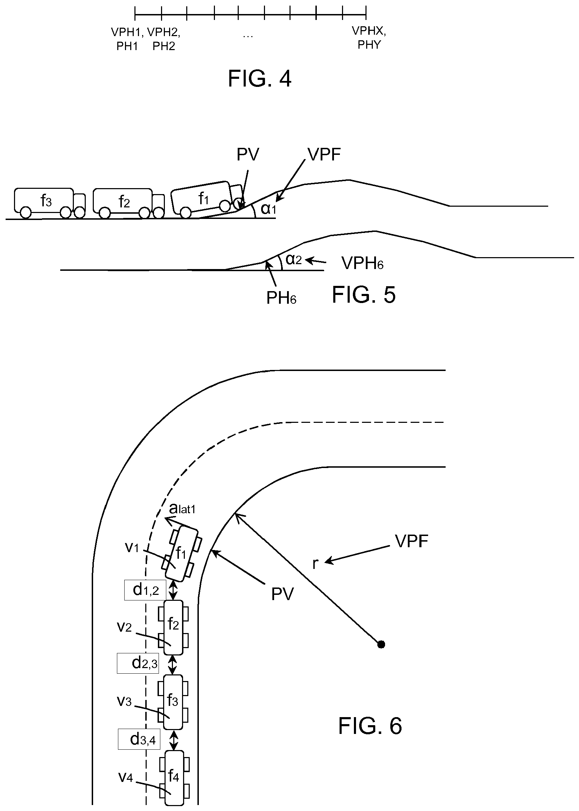

One example of a profile is shown in Figure 4. The profile comprises here the properties $VPH_1$, $VPH_2...VPH_X$ at their respective positions in the profile $PH_1$, $PH_2..P_Y$. The properties are here shown as points, but they may instead be intervals in the form of a certain property along a certain section of road. The profile may, for example, be divided into road segments with a certain property, such as a steep uphill or downhill section, or a speed or an acceleration. The properties also may overlap: it is, of course, possible for the road to have a bend, for example, at the same time as it has a gradient. One position $PH_j$ (where $j=1...Y$) in the profile may then have several properties. A property can be a direct property, for example any one of a gradient $\alpha$ and a radius of curvature r. Alternatively, a property can be an indirect property, such as a speed v or an acceleration a.

The map data specify the topography of the road. Map data, however, are not always exact with currently available measuring instruments, and contain uncertainties and errors. The profile unit 4 must rely also on the position specification from the positioning unit 2 of the vehicle. Even though the positioning systems that the positioning unit 2 uses are becoming better and better, errors can arise in the final position specification of the vehicle. According to one embodiment, the vehicle $f_k$ comprises the map unit 6 with existing map data and a control unit 7 that is configured to correct existing map data in the vehicle $f_k$ in accordance with the correctional data $\beta$, and to generate corrected map data $\theta_k$. The control unit 7 may be configured, in addition or instead, to correct the position specification of the vehicle $f_k$, according to the correctional data $\beta$ and to generate a corrected position $p_{corrk}$ for the vehicle $f_k$. According to one embodiment, the analysis unit 5 is a part of the control unit 7. This is shown in Figure 3 through the control unit 7 being shown as a dashed line.

The control unit 7 may be configured, in addition or instead, to correct an existing driving strategy for the vehicle $f_k$ in accordance with the correctional data $\beta$, to determine a corrected driving strategy $\varphi_k$ for the vehicle $f_k$, and to generate a driving strategy signal that describes the corrected driving strategy $\varphi_k$. Examples of how a driving strategy can be determined will be described below. The driving strategy signal may be sent, for example, to all the vehicles in the vehicle platoon such that they receive information about a correct driving strategy. Alternatively, the correctional data $\beta$ may be transmitted to the vehicles in the vehicle platoon. The control unit 7 may in this case be configured to correct map data $\theta_k$, positions $p_k$, driving strategy $\varphi_k$, etc. for the vehicle $f_k$ that possess the control unit 7.

All or some part of the data can be transmitted also to a road junction or central unit. A global error in, for example, map data can then be reported to all vehicles on the road that can communicate in a wireless manner.

According to one embodiment, a unit, such as the detector unit 8, is configured to determine a status parameter VPF that describes the actual property of the actual road and to generate a signal that indicates the status parameter VPF. The status parameter VPF may specify, for example, the actual speed $v_f$ of the vehicle or its actual acceleration

$a_f$. Figures 5 and 6 show examples of a vehicle platoon in two different road situations with different topographies. Figure 5 illustrates that the lead vehicle in the vehicle platoon has just started to drive up a hill. The appearance of the road according to the profile is shown at the bottom of the drawing. A gradient sensor in the vehicle determines here the status parameter VPF to be the gradient $\alpha_1$. The analysis unit 5 is further configured to receive the status signal and to determine a position PV for the status parameter VPF of the actual road. The position PV of the status parameter VPF is determined, for example, through the analysis unit 5 noting the position specification from the positioning unit 2 at the same time t that VPF is determined. The analysis unit 5 is further configured to determine a position $PH_j$ for the location in the profile at which the road, according to map data, essentially behaves as specified by the status parameter VPF, alternatively the location in the profile at which the predicted speed v or acceleration a is essentially the same as the status parameter VPF. The term "essentially" here is used to describe the situation in which the vehicle, or the status parameter VPF, may not behave in exactly the same manner as the predicted profile due to possible uncertainty in the calculation model, small irregularities in the ground that may cause the speed of the vehicle to vary, noise in the detectors, etc. The term "essentially" means in this case, for example, that the predicted road and the status parameter VPF agree within an appropriate interval for the relevant magnitude. Status parameters in the profile are thus examined in order to determine a position $PH_i$ in the profile at which the status parameter VPF is as similar as possible to some property of the profile $VPH_i$ (where i=1 ...X). According to one embodiment, only an interval around the position PV of the vehicle at which VPF was determined is examined, in order to avoid matches being found in, for example, another hill in the profile. The interval is, for example, $\pm 50$, $\pm 40$, $\pm 30$, $\pm 20$, $\pm 10$ or $\pm 5$ m. According to one embodiment, the position PV is at the start of the hill, and can in this case be matched to a start of the corresponding hill in the profile. According to another embodiment, the position PV is directly after the end of a hill, and VPF in this case specifies that the road is flat, with a gradient that is principally zero. VPF can in this case be matched to a similar property in the profile, thus a transition from hill to flat road. The profile property $VPH_6$ at point $PH_6$ is essentially similar to the VPF in the example shown in Figure 5. The analysis unit 5 is further configured to determine a difference $\Delta P$ between the positions PV and PHi, and to calculate correctional data $\beta$ based on the difference $\Delta P$. In the example in Figure 5, this means that the difference at the position PV and its corresponding position in the profile $PH_6$ is determined.

Map data may contain also errors such as, for example, an erroneous specification of the height of a hill, an erroneous radius of curvature, etc. In order to discover such errors, the analysis unit is configured to determine the correctional data $\beta$ through it being configured also to identify the property $VPH_i$ of the profile at the determined position PHi, to determine a difference $\Delta VP$ between $VPF_i$ and $VPH_i$, and to determine the correctional data $\beta$ based also on the difference $\Delta VP$. In the example that is shown in Figure 5, this means that when the position $PH_6$ has been determined, the property $VPH_6$ of the profile is identified, which in this case is the gradient $\alpha_2$. This gradient $\alpha_2$ is compared with the road property $VPF_1$, which in this case is the true gradient $\alpha_1$, and a difference $\Delta VP$ between them is determined. The correctional data $\beta$ can then be determined also for the difference $\Delta VP$, and can thus specify a difference in height for the map data. In a similar manner, an indirect property such as speed v or acceleration a can be used, where the predicted and the measured speed v or acceleration a are compared, and the correctional data $\beta$ are determined through freely chosen deviations between the predicted and the measured speed v or acceleration a, respectively.

The positions may be geographical coordinates in longitude and latitude according to the international standard ISO 6709, from 2008. The correctional data $\beta$ can thus comprise, for example, a difference in latitude, and a difference in longitude. Also the height can be specified according to ISO 6709, from 2008. The correctional data $\beta$ can comprise also a difference in height.

Figure 6 shows an example of a vehicle platoon in which the lead vehicle in the vehicle platoon has just started to drive around a bend. The detector unit 8 in the lead vehicle can then determine, by detecting the steering wheel position or the lateral acceleration $a_{lat1}$ of the vehicle, the true radius of curvature r of the bend. Similarly to the case that is illustrated in Figure 5, the analysis unit can be configured to determine a position PV for the road status parameter VPF of the actual road. VPF in this case is a measured and determined radius r. This takes place here at the entrance to the bend at position PV, but it may be in intervals, etc. as has been explained in association with Figure 5. Also the position can be determined in a similar manner to that described for the example in Figure 5. The analysis unit is further configured to determine a position $PH_j$ for the location in the profile at which the road according to map data behaves essentially according to the status parameter VPF. A difference $\Delta P$ is determined between the positions PV and $PH_j$, and the correctional data $\beta$ are determined based on the difference $\Delta P$.

In a similar manner as that described for the example in Figure 5, an error in the property itself can be determined. The analysis unit 5 is in this case configured to determine the correctional data $\beta$ through it also identifying the property $VPH_i$ of the profile at the determined position $PH_j$, determining a difference $\Delta VP$ between VPF (here the property r) and $VPH_i$, and determining the correctional data $\beta$ based also on the difference $\Delta VP$.

The knowledge about what errors are present in map data, positional data, etc., is particularly useful in a vehicle platoon when the vehicles in the vehicle platoon use cruise-control systems that use information about the road ahead. Such a predictive cruise-control system can be denoted by the abbreviation "LAC". In order to obtain the expected savings in fuel and time, it is a precondition that data such as map data and positional data passed to the LAP are in accordance with reality. Predictive cruise control is a predictive control plan that has knowledge about some of the disturbances, in this case the topography of the road, that lie ahead. An optimisation is carried out with respect to a criterion, which optimisation involves a predicted behaviour of the system. An optimal solution is here sought for the problem along the limited profile that is obtained by truncating the horizon of the complete driving session. The objective of the optimisation is to minimise the energy and the time required for the driving session, while the speed of the vehicle is held within a predetermined interval. The optimisation can be carried out using, for example, MPC (model predictive control) or an LQR (linear quadratic regulator) with respect to minimising fuel consumption and time in a cost function *I* based on a non-linear dynamics model and fuel consumption model for the vehicle $f_k$, limitations on the input control signals, and limitations on the maximum absolute deviation, for example 5 km/h, from the speed limit for the road. One example of how such an optimisation can be carried out is described in "Look-ahead control of heavy vehicles", E. Hellström, Linköping University, 2010. A vehicle model that describes the principal forces that influence a vehicle in motion are described in that publication, according to:

$$m_t \frac{dv}{dt} = F_{motor} - F_{broms} - F_{luftmotstånd}(v) - F_{rullning}(\alpha) - F_{gravitet}(\alpha)$$

$$\frac{i_t i_f \eta_t \eta_f}{r_w} T(w_e, \delta) - F_{brake} - \frac{1}{2} c_D A_a \rho_a v^2 - c_r mg cos\alpha - mg sin\alpha \quad , \quad (1)$$

where $\alpha$ describes the gradient of the road, $c_D$ and $c_r$ are characteristic coefficients, $g$ describes the force of gravity, $\rho_a$ is the air density, $r_w$ is the wheel radius, and $i_t$, $i_f$, $\eta_t$, $\eta_f$ are constants specific for the transmission and gearing.

The accelerating mass of the vehicle $m_t(m, J_w, J_s, i_t, i_f, \eta_t, \eta_f)$ depends on the gross mass $m$, wheel inertia $J_w$, engine inertia $J_s$, the gear ratio and efficiency of the gearbox $i_t$, $\eta_t$ and the final gear ratio and efficiency $i_f, \eta_f$.

The predictive cruise-control system LAC increases the speed of the vehicle in advance when approaching a steep uphill section, and thus the vehicle obtains a higher mean speed when the vehicle travels along the steep uphill section. In the same manner, the speed is reduced before the vehicle enters a steep downhill section. The speed of the vehicle can be allowed to fall to a minimum in an uphill section and to regain the lost speed until after the vehicle has passed the top, i.e. now on a flat road. If the uphill section is followed by a downhill section, the speed can be maintained at a lower level in the uphill section in order to avoid having to brake in the downhill section as the speed of the vehicle becomes too high, and instead to exploit the potential energy that the vehicle obtains from its weight in the downhill section. Both time and fuel can be saved.

A low gradient of the road $\alpha$ can be described according to:

$$\alpha_l < \alpha < \alpha_u \qquad\qquad (2)$$

where

$$\alpha_u = \frac{k_i^e T_e(\delta_{max}, \omega_e) - k_i^d v_i^2 f(d_{i-1,i}) - k_i^{fr}}{k_i^g} > 0$$

(3)

$$\alpha_l = \frac{k_i^e T_e(\omega_e) - k_i^d v_i^2 f(d_{i-1,i}) - k_i^{fr}}{k_i^g} < 0$$

(4)

$\alpha_u$ is the steepest gradient at which the speed can be maintained in an uphill section with maximum engine torque, and $\alpha_l$ is the steepest gradient in which a heavy vehicle can maintain a constant speed through coasting, without requiring to brake. Steep hills are defined as segments of road with a gradient outside of the interval in (2). The profile may be divided, as has been previously described, into different road segments. One property may be, for example, that a road segment in the horizon is classified as a steep uphill or downhill section with a gradient outside of the interval in (2).

By providing the predictive cruise-control system with correct map data and positional data, it is possible to obtain a correct driving strategy, thus a correct driving profile, for the vehicle in the vehicle platoon. The driving profile contains target speeds $v_{ref}$ or target accelerations $a_{ref}$ for the vehicle $f_k$ at positions along the profile.

The system 1 in the lead vehicle can, according to one embodiment, discover that there is an error in a calculated driving profile (that has not yet been corrected) by comparing the actual speed $v_f$ or acceleration $a_f$ of the vehicle at an actual point in the driving profile, for example at the start of a hill, with the target speed $v_{ref}$ that it should have had at the same position in the profile. In the case in which $v_f$ is not essentially the same speed as $v_{ref}$ at the same position according to the profile, the control unit 7 can be configured to determine the correctional data $\beta$ and subsequently to determine at least one of corrected map data $\theta_k$, positional data $p_{corrk}$ and the driving profile $\varphi_k$, according to the correctional data $\beta$. The determination of correctional data $\beta$, etc. can thus be initiated through the lead vehicle discovering that it has an erroneous speed at its true position compared with the speed it should have had at the position according to the driving profile. According to one embodiment, the system 1 is configured to determine correctional data $\beta$ for each one of several vehicles in the vehicle platoon, to compare the relevant sets of correctional data with each other and to determine supervisory correctional data $\beta_{sup}$ based on the result of the comparison. In the case in which, for example, the dynamic behaviour of the vehicle is not what it should be, for example if the maximum torque noted for the vehicle is not correct, it is - even so - possible to obtain supervisory correctional data $\beta_{sup}$ that are correct. It is possible to determine correctional data for $\beta$, for example, three different vehicles. In the case in which it is based on the same map data and it is assumed that the error in position specification is the same for the different vehicles, different values of correctional data may suggest that the error lies in a parameter that relates to the dynamic behaviour of the vehicle. In the case in which two of the three sets of correctional data are essentially the same, or the same within a certain interval, it can be assumed that the two sets of correctional data specify correct correctional data, and to specify that their correctional data are to be the supervisory correctional data $\beta_{sup}$.

Also when a position-based cooperative cruise-control system, an LAP, is to be implemented for the complete vehicle platoon, it is a precondition that data such as map data and positional data passed to the LAP are in accordance with reality, in order to obtain the expected savings in fuel and time. An LAP thus determines a common driving strategy for the complete vehicle platoon.

The control unit 7 that is shown in Figure 3 is, according to one embodiment, configured to determine a common driving strategy for the vehicles in the vehicle platoon. According to this embodiment, the control unit 7 is configured to determine a driving profile for at least the vehicle $f_k$ in the vehicle platoon based on the at least one property of the profile, whereby the driving profile contains target values for the vehicle $f_k$ at positions along the horizon. The analysis unit 5 is configured to determine a driving strategy for the vehicles in the vehicle platoon based on at least the driving profile for vehicle $f_k$ and the correctional data $\beta$, and to pass this driving strategy to all vehicles in the vehicle platoon. The control unit 7 and the analysis unit 5 thus implement together a form of LAP. The target values may be, for example, target speeds $v_{ref}$, target accelerations $a_{ref}$, or target separation distances di. According to one embodiment, each vehicle $f_k$ comprises a control unit 7 that is configured to determine a driving profile for each one of the vehicles $f_k$. The analysis unit 5 is, according to one embodiment, configured to analyse the driving profiles in order to determine one selected driving profile as driving strategy for the vehicles in the vehicle platoon.

Before the driving profile is passed to the vehicles, the positions in the driving profile are mapped to actual positions along the road ahead, such that the vehicles in vehicle platoons can control their speed according to target values at the same actual positions along the road. This is the case for all embodiments described in this application.

Different ways of determining a selected driving profile are available. The selected driving profile can, for example, be determined to be the driving profile that has been determined for the most limited vehicle in the vehicle platoon. Examples of the most limited vehicle have been described above. The most limited vehicle can also be determined to be the vehicle that has the largest speed fluctuations in its driving profile in and close to, or in or close to, an approaching hill or curve, or hill and curve. In order to determine which driving profile is thus to become the selected driving profile, the analysis unit 7 is configured to determine a difference $\Delta v$ for each driving profile, which indicates the largest difference between a maximum speed $v_{max}$ and a minimum speed $v_{min}$, to compare the difference $\Delta v$ for the different driving profiles with each other and to determine a selected driving profile that has the largest difference $\Delta v$ based on the comparison. The maximum speed $v_{max}$ is one of the target speeds $v_{ref}$ in the driving profile, and the minimum speed $v_{min}$ is one of the target speeds $v_{ref}$ in the driving profile in and close to, or in or close to, an approaching hill or curve, or hill and curve.

The analysis unit 5, the control unit 7 and the profile unit 4 may be constituted by one or several processor units and one or several memory units. Other units may, for example, comprise a process unit and memory. A processor unit may be constituted by a CPU (central processing unit). The memory unit may comprise a transient or a non-transient memory or it may comprise a transient and a non-transient memory, such as flash memory or RAM (random access memory). The processor unit may be a part of a computer or a computer system, for example an ECU (electronic control unit), in a vehicle 2.

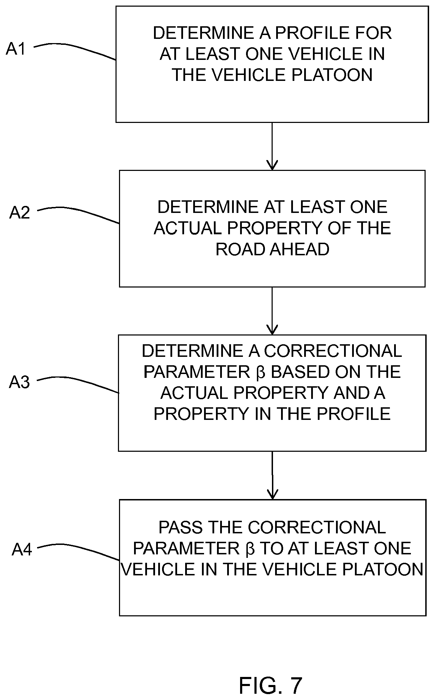

Figure 7 shows a flow diagram for a method for a vehicle platoon as described above. The method can be implemented as program code in a computer program P shown as a part of the analysis unit 5 in Figure 3. The program code P can cause the system 1 to carry out any one of the steps according to the method when it is run on a processor unit in the system 1 (Figure 3). The method will now be explained with reference to the flow diagram in Figure 7. The method comprises to determine a profile for at least one vehicle in the vehicle platoon with the aid of positional data and map data for a road ahead, which profile contains at least one property of the road ahead (A1). At least one actual property of the road ahead is determined (A2). The method further comprises to determine correctional data $\beta$ based on the at least one actual property of the road ahead and the at least one property of the profile, whereby the actual property and the at least one property of the profile essentially concern the same property (A3). A property may be, for example, any one of a gradient $\alpha$, radius of curvature r, speed v or acceleration a. The correctional data $\beta$ may be determined, for example, by determining a status parameter VPF that describes the actual property of the actual road, determining a position PV for the status parameter VPF of the actual road, by determining a position $PH_j$ for the location in the profile at which the road according to map data behaves essentially according to the status parameter VPF, determining a difference $\Delta P$ between the positions PV and PH, and determining the correctional data $\beta$ based on the difference $\Delta P$. Correctional data can be determined also by identifying the property $VPH_i$ of the profile at the determined position $PH_j$, determining a difference $\Delta VP$ between VPF and $VPH_i$, and determining the correctional data $\beta$ based also on the difference $\Delta VP$.

The correctional data $\beta$ are subsequently passed to at least one vehicle $f_k$ in the vehicle platoon (A4). The correctional data $\beta$ can be used in various ways. The vehicle $f_k$ can, for example, correct either or both of existing map data in the vehicle $f_k$ and the position of vehicle $f_k$, according to the correctional data $\beta$. The vehicle $f_k$ may, also or instead, correct an existing driving strategy for the vehicle $f_k$ according to the correctional data $\beta$, and determine a corrected driving strategy. The vehicle $f_k$ is subsequently controlled according to the corrected driving strategy.

In order to determine a driving strategy for the vehicles in the vehicle platoon, the method comprises, according to one embodiment, to determine a driving profile for at least the vehicle $f_k$ in the vehicle platoon based on the at least one property of the profile, whereby the driving profile contains target values for the vehicle $f_k$ at positions along the horizon. A driving strategy is subsequently determined for the vehicles in the vehicle platoon based on at least the driving profile for the vehicle $f_k$ and the correctional data $\beta$, and the driving strategy is passed to all vehicles in the vehicle platoon.

According to one embodiment, a driving profile is determined for each one of several vehicles in the vehicle platoon. The driving profiles are then analysed to determine a selected driving profile as driving strategy for the vehicles in the vehicle platoon.

According to another embodiment, the method comprises also to determine correctional data $\beta$ for each one of several vehicles in the vehicle platoon, to compare the relevant sets of correctional data with each other and to determine supervisory correctional data $\beta_{sup}$ based on the result of the comparison. It is possible in this manner to compensate for possible faults in vehicle dynamics.

Other embodiments that also can be applied as method have been described in association with the description of the system. The invention includes also a computer program product comprising the program code P stored on a medium that can be read by a computer in order to carry out the method steps described above. The computer program product may be, for example, a CD disk.

The present invention is not limited to the embodiments described above. Various alternatives, modifications and equivalents can be used. For this reason, the embodiments named above do not limit the scope of the invention, which is defined by the attached claims.

**Claims**

1. A system (1) for a vehicle platoon that comprises at least one lead vehicle and one additional vehicle, each of which has a positioning unit (2) and a unit (3) for wireless communication, wherein the system comprises:

    - a profile unit (4) configured to determine a profile for at least one vehicle in the vehicle platoon with the aid of positional data and map data for a road ahead, which profile contains at least one property of the road ahead;
    **characterised by:**
    - an analysis unit (5) that is configured to:

        - determine at least one actual property of the road ahead;
        - determine correctional data $\beta$ based on the at least one actual property of the road ahead and the at least one property of the profile; wherein the actual property and at the least one property of the profile concern the same property;
        - to pass the correctional data $\beta$ to at least one vehicle $f_k$ in the vehicle platoon.

2. The system (1) according to claim 1, that comprises to generate a correctional signal that indicates the correctional data $\beta$, and to transmit the correctional signal to at least one vehicle $f_k$ in the vehicle platoon.

3. The system (1) according to claim 1 or 2, wherein the vehicle $f_k$ comprises a map unit (6) with existing map data and a control unit (7) that is configured to carry out at least one of correcting existing map data in the vehicle $f_k$ in accordance with the correctional data $\beta$ and to generate corrected map data $\theta_k$, and correcting the position specification of the vehicle $f_k$, according to the correctional data $\beta$ and to generate a corrected position $P_{corrk}$ for the vehicle $f_k$.

4. The system (1) according to any one of the preceding claims, wherein the vehicle $f_k$ comprises a control unit (7) that is configured to correct an existing driving strategy for the vehicle $f_k$ in accordance with the correctional data $\beta$, to determine a corrected driving strategy $\varphi_k$ for the vehicle $f_k$, and to generate a driving strategy signal that describes the corrected driving strategy $\varphi_k$.

5. The system (1) according to any one of the preceding claims, that is configured to determine correctional data $\beta$ for each one of several vehicles in the vehicle platoon, to compare the relevant sets of correctional data with each other and to determine supervisory correctional data $\beta_{sup}$ based on the result of the comparison.

6. The system (1) according to any one of the preceding claims, that comprises:

   - a unit that is configured to determine a status parameter VPF that describes the actual property of the actual road and to generate a signal that indicates the status parameter VPF; whereby the analysis unit (5) is configured to determine the correctional data $\beta$ through:

     - determining a position PV for the status parameter VPF of the actual road,
     - determining a position $PH_j$ for the location in the profile at which the road according to map data behaves essentially according to the status parameter VPF;
     - determining a difference $\Delta P$ between the positions PV and $PH_j$;
     - determining the correctional data $\beta$ based also on the difference $\Delta P$.

7. The system (1) according to claim 6, wherein the analysis unit (5) is configured to determine the correctional data $\beta$ through also:

     - identifying the property $VPH_i$ of the profile at the position $PH_j$ that has been determined;
     - determining a difference $\Delta VP$ between VPF and $VPH_i$,
     - calculating the correctional data $\beta$ based also on the difference $\Delta VP$.

8. The system (1) according to any one of the preceding claims, wherein a property is any one of a gradient $\alpha$ or a radius of curvature r.

9. The system (1) according to any one of claims 1 to 7, wherein the profile unit (4) is configured to:

     - determine a profile for the vehicle that contains at least one indirect property of the road ahead based on a predicted dynamic behaviour of the vehicle along the road ahead, whereby the analysis unit (5) is configured to:
     - determine at least one actual indirect property of the road ahead based on an actual dynamic behaviour of the vehicle; and to:
     - determine correctional data $\beta$ based on the at least one actual indirect property of the road ahead and the at least one indirect property of the profile.

10. The system (1) according to claim 9, wherein an indirect property is any one of a speed v or an acceleration a.

11. A method for a vehicle platoon that comprises at least one lead vehicle and one additional vehicle, each of which has a positioning unit (2) and a unit (3) for wireless communication, wherein the method comprises to:

     - determine a profile for at least one vehicle in the vehicle platoon with the aid of positional data and map data for a road ahead, which profile contains at least one property of the road ahead;
     **characterised by:**

     - determine at least one actual property of the road ahead;
     - determine correctional data $\beta$ based on the at least one actual property of the road ahead and the at least one property of the profile, whereby the actual property and the at least one property of the profile concern the same property;
- to pass the correctional data $\beta$ to at least one vehicle $f_k$ in the vehicle platoon.

12. The method according to claim 11, that comprises that the vehicle $f_k$ corrects either or both of existing map data in the vehicle $f_k$ and the position of vehicle $f_k$, according to the correctional data $\beta$.

13. The method according to claim 11 or 12, that comprises that the vehicle $f_k$ corrects an existing driving strategy for the vehicle $f_k$ according to the correctional data $\beta$ and determines a corrected driving strategy $\varphi_k$, after which the vehicle $f_k$ is controlled according to the corrected driving strategy $\varphi_k$.

14. The method according to any one of claims 11 to 13, that is configured to determine correctional data $\beta$ for each one of several vehicles in the vehicle platoon, to compare the relevant sets of correctional data with each other and to determine supervisory correctional data $\beta_{sup}$ based on the result of the comparison.

15. The method according to any one of claims 11 to 14, that comprises to determine the correctional data $\beta$ by:

- determining a status parameter VPF that describes the actual property of the actual road;
- determining a position PV for the status parameter VPF of the actual road,
- determining a position $PH_j$ for the location in the profile at which the road according to map data behaves essentially according to the status parameter VPF;
- determining a difference $\Delta P$ between the positions PV and $PH_j$;
- determining the correctional data $\beta$ based also on the difference $\Delta P$.

16. The method according to claim 15, that comprises to:

- identify the property $VPH_i$ of the profile at the position $PH_j$ that has been determined;
- determine a difference $\Delta VP$ between VPF and $VPH_i$;
- calculate the correctional data $\beta$ based also on the difference $\Delta VP$.

17. The method according to any one of claims 11 to 16, wherein a property is any one of a gradient $\alpha$ or a radius of curvature r.

18. The method according to any one of claims 11 to 16, that comprises to:

- determine a profile for the vehicle that contains at least one indirect property of the road ahead based on a predicted dynamic behaviour of the vehicle along the road ahead;
- determine at least one actual indirect property of the road ahead based on an actual dynamic behaviour of the vehicle;
- determine the correctional data $\beta$ based on the at least one actual indirect property of the road ahead and the at least one indirect property of the profile.

19. The method according to claim 18, wherein the indirect property of the road ahead is any one of a speed v or an acceleration a.

20. A computer program, P, of a system (1), wherein said computer program, P, comprises program code to cause the control unit (8) to carry out any one of the steps according to claims 11 to 19.

21. A computer program product comprising a program code stored on a medium that can be read by a computer in order to carry out the method steps according to any one of claims 11 to 19.

**Patentansprüche**

1. System (1) für einen Fahrzeugverband, der zumindest ein Führungsfahrzeug und ein weiteres Fahrzeug umfasst, von denen jedes eine Positionsbestimmungseinheit (2) und eine Einheit (3) zur Drahtloskommunikation hat, wobei das System aufweist:

- eine Profileinheit (4), die dazu eingerichtet ist, unter Zuhilfenahme von Positionsdaten und Kartendaten für eine vorausbefindliche Straße ein Profil für zumindest ein Fahrzeug in dem Fahrzeugverband zu bestimmen, wobei das Profil zumindest eine Eigenschaft der vorausbefindlichen Straße enthält, **gekennzeichnet durch**:

- eine Analyseeinheit (5), die eingerichtet ist zum:

  - Ermitteln zumindest einer gegenwärtigen Eigenschaft der vorausbefindlichen Straße,
  - Ermitteln von Korrekturdaten $\beta$ basierend auf der zumindest einen gegenwärtigen Eigenschaft der vorausbefindlichen Straße und der zumindest einen Eigenschaft des Profils, wobei die gegenwärtige Eigenschaft und die zumindest eine Eigenschaft des Profils dieselbe Eigenschaft betreffen,
  - Weitergeben der Korrekturdaten $\beta$ an wenigstens ein Fahrzeug $f_k$ in dem Fahrzeugverband.

2. System (1) nach Anspruch 1, welches ein Erzeugen eines die Korrekturdaten $\beta$ angebenden Korrektursignals und ein Senden des Korrektursignals an wenigstens ein Fahrzeug $f_k$ in dem Fahrzeugverband umfasst.

3. System (1) nach Anspruch 1 oder 2, bei dem das Fahrzeug $f_k$ eine Karteneinheit (6) mit existierenden Kartendaten und eine Steuereinheit (7) umfasst, die dazu eingerichtet ist, eine Korrektur in dem Fahrzeug $f_k$ existierender Kartendaten in Übereinstimmung mit den Korrekturdaten $\beta$ auszuführen und korrigierte Kartendaten $\theta_k$ zu erzeugen und/oder die Positionsbestimmung des Fahrzeugs $f_k$ in Übereinstimmung mit den Korrekturdaten $\beta$ zu berichtigen und eine korrigierte Position $P_{corrk}$ für das Fahrzeug $f_k$ zu erzeugen.

4. System (1) nach einem der vorhergehenden Ansprüche, bei dem das Fahrzeug $f_k$ eine Steuereinheit (7) aufweist, die dazu eingerichtet ist, eine bestehende Fahrstrategie des Fahrzeugs $f_k$ in Übereinstimmung mit den Korrekturdaten $\beta$ zu korrigieren, eine korrigierte Fahrstrategie $\varphi_k$ für das Fahrzeug $f_k$ zu ermitteln und ein Fahrstrategiesignal zu erzeugen, welches die korrigierte Fahrstrategie $\varphi_k$ beschreibt.

5. System (1) nach einem der vorhergehenden Ansprüche, das dazu eingerichtet ist, Korrekturdaten $\beta$ für jedes von mehreren Fahrzeugen in dem Fahrzeugverband zu bestimmen, die betreffenden Korrekturdatensätze miteinander zu vergleichen und basierend auf dem Ergebnis des Vergleichs Leitungskorrekturdaten $\beta_{sup}$ festzulegen.

6. System (1) nach einem der vorhergehenden Ansprüche, welches aufweist:

  - eine Einheit, die dazu eingerichtet ist, einen Statusparameter VPF zu bestimmen, der die gegenwärtige Eigenschaft der gegenwärtigen Straße beschreibt, und ein Signal zu erzeugen, das den Statusparameter VPF angibt, wobei die Analyseeinheit (5) dazu eingerichtet ist, die Korrekturdaten $\beta$ zu ermitteln durch:

    - Feststellen einer Position PV für den Statusparameter VPF der gegenwärtigen Straße,
    - Ermitteln einer Position $PH_j$ für die Stelle in dem Profil, an der gemäß Kartendaten die Straße sich im Wesentlichen gemäß dem Statusparameter VPF verhält,
    - Ermitteln einer Differenz $\Delta P$ zwischen den Positionen PV und $PH_j$,
    - Bestimmen der Korrekturdaten $\beta$ basierend auch auf der Differenz $\Delta P$.

7. System (1) nach Anspruch 6, bei dem die Analyseeinheit (5) dazu eingerichtet ist, die Korrekturdaten $\beta$ auch zu ermitteln durch:

  - Identifizieren der Eigenschaft VPHi des Profils an der Stelle $PH_j$, die ermittelt worden ist,
  - Ermitteln einer Differenz $\Delta VP$ zwischen VPF und VPHi,
  - Berechnen der Korrekturdaten $\beta$ basierend auch auf der Differenz $\Delta VP$.

8. System (1) nach einem der vorhergehenden Ansprüche, bei dem eine Eigenschaft eine jegliche ist aus einem Gradienten $\alpha$ oder einem Krümmungsradius r.

9. System (1) nach einem der Ansprüche 1 bis 7, bei dem die Profileinheit (4) eingerichtet ist zum:

  - Bestimmen eines Profils für das Fahrzeug, das wenigstens eine mittelbare Eigenschaft der vorausbefindlichen Straße basierend auf einem vorhergesagten dynamischen Verhalten des Fahrzeugs entlang der vorausbefindlichen Straße enthält, wobei die Analyseeinheit (5) eingerichtet ist zum
  - Ermitteln zumindest einer gegenwärtigen mittelbaren Eigenschaft der vorausbefindlichen Straße basierend auf einem gegenwärtigen dynamischen Verhalten des Fahrzeugs, und zum:

- Bestimmen von Korrekturdaten β basierend auf der zumindest einen gegenwärtigen mittelbaren Eigenschaft der vorausbefindlichen Straße und der zumindest einen mittelbaren Eigenschaft des Profils.

10. System (1) nach Anspruch 9, bei dem eine mittelbare Eigenschaft eine jegliche aus einer Geschwindigkeit v oder einer Beschleunigung a ist.

11. Verfahren für einen Fahrzeugverband, der zumindest ein Führungsfahrzeug und ein weiteres Fahrzeug umfasst, von denen jedes eine Positionsbestimmungseinheit (2) und eine Einheit (3) zur Drahtloskommunikation hat, wobei das Verfahren umfasst:

- Bestimmen eines Profils für wenigstens ein Fahrzeug in dem Fahrzeugverband unter Zuhilfenahme von Positionsdaten und Kartendaten für eine vorausbefindliche Straße, wobei das Profil zumindest eine Eigenschaft der vorausbefindlichen Straße enthält,
**gekennzeichnet durch**:
- Ermitteln zumindest einer gegenwärtigen Eigenschaft der vorausbefindlichen Straße,
- Bestimmen von Korrekturdaten β basierend auf der zumindest einen gegenwärtigen Eigenschaft der vorausbefindlichen Straße und der zumindest einen Eigenschaft des Profils, wobei die gegenwärtige Eigenschaft und die zumindest eine Eigenschaft des Profils dieselbe Eigenschaft betreffen,
- Weitergeben der Korrekturdaten β an wenigstens ein Fahrzeug $f_k$ in dem Fahrzeugverband.

12. Verfahren nach Anspruch 11, welches umfasst, dass das Fahrzeug $f_k$ entweder in dem Fahrzeug $f_k$ existierende Kartendaten und/oder die Position des Fahrzeugs $f_k$ in Übereinstimmung mit den Korrekturdaten β korrigiert.

13. Verfahren nach Anspruch 11 oder 12, welches umfasst, dass das Fahrzeug $f_k$ eine bestehende Fahrstrategie für das Fahrzeug $f_k$ in Übereinstimmung mit den Korrekturdaten β korrigiert und eine korrigierte Fahrstrategie $\varphi_k$ bestimmt, woraufhin das Fahrzeug $f_k$ in Übereinstimmung mit der korrigierten Fahrstrategie $\varphi_k$ gesteuert wird.

14. Verfahren nach einem der Ansprüche 11 bis 13, das dazu eingerichtet ist, Korrekturdaten β für jedes von mehreren Fahrzeugen in dem Fahrzeugverband zu bestimmen, die betreffenden Korrekturdatensätze miteinander zu vergleichen und basierend auf dem Ergebnis des Vergleichs Leitungskorrekturdaten $\beta_{sup}$ zu bestimmen.

15. Verfahren nach einem der Ansprüche 11 bis 14, welches umfasst, dass die Korrekturdaten β bestimmt werden durch:

- Ermitteln eines Statusparameters VPF, der die gegenwärtige Eigenschaft der gegenwärtigen Straße beschreibt,
- Feststellen einer Position PV für den Statusparameter VPF der gegenwärtigen Straße,
- Ermitteln einer Position $PH_j$ für die Stelle in dem Profil, an der gemäß Kartendaten die Straße sich im Wesentlichen gemäß dem Statusparameter VPF verhält,
- Ermitteln einer Differenz $\Delta P$ zwischen den Positionen PV und $PH_j$,
- Bestimmen der Korrekturdaten β basierend auch auf der Differenz $\Delta P$.

16. Verfahren nach Anspruch 15, welches umfasst:

- Identifizieren der Eigenschaft VPHi des Profils an der Position $PH_j$, die ermittelt worden ist,
- Ermitteln einer Differenz $\Delta VP$ zwischen VPF und VPHi,
- Berechnen der Korrekturdaten β basierend auch auf der Differenz $\Delta VP$.

17. Verfahren nach einem der Ansprüche 11 bis 16, bei dem eine Eigenschaft eine jegliche aus einem Gradienten α oder einem Krümmungsradius r ist.

18. Verfahren nach einem der Ansprüche 11 bis 16, welches umfasst:

- Bestimmen eines Profils für das Fahrzeug, das zumindest eine mittelbare Eigenschaft der vorausbefindlichen Straße enthält, basierend auf einem vorhergesagten dynamischen Verhalten des Fahrzeugs entlang der vorausbefindlichen Straße,
- Ermitteln zumindest einer gegenwärtigen mittelbaren Eigenschaft der vorausbefindlichen Straße basierend auf einem gegenwärtigen dynamischen Verhalten des Fahrzeugs,
- Bestimmen der Korrekturdaten β basierend auf der zumindest einen gegenwärtigen mittelbaren Eigenschaft der vorausbefindlichen Straße und der zumindest einen mittelbaren Eigenschaft des Profils.

**19.** Verfahren nach Anspruch 18, bei dem die mittelbare Eigenschaft der vorausbefindlichen Straße eine jegliche ist aus einer Geschwindigkeit v oder einer Beschleunigung a.

**20.** Computerprogramm, P, eines Systems (1), wobei das Computerprogramm, P, Programmcode umfasst, welches die Steuereinheit (8) dazu veranlasst, einen jeglichen der Schritte gemäß den Ansprüchen 11 bis 19 auszuführen.

**21.** Computerprogrammprodukt mit einem Programmcode, der auf einem Medium gespeichert ist, das von einem Computer gelesen werden kann, um die Verfahrensschritte nach einem der Ansprüche 11 bis 19 auszuführen.

**Revendications**

**1.** Système (1) pour un peloton de véhicules qui comprend au moins un véhicule de tête et un véhicule supplémentaire, chacun d'eux a une unité de positionnement (2) et une unité (3) pour une communication sans fil, dans lequel le système comprend :

- une unité de profil (4) configurée pour déterminer un profil pour au moins un véhicule dans le peloton de véhicules avec l'aide de données de position et de données cartographiques pour une route devant, lequel profil contient au moins une propriété de la route devant ;
**caractérisé par** :
- une unité d'analyse (5) qui est configurée pour :

- déterminer au moins une propriété actuelle de la route devant ;
- déterminer des données correctionnelles $\beta$ sur base de l'au moins une propriété actuelle de la route devant et de l'au moins une propriété du profil ; dans lequel la propriété actuelle et l'au moins une propriété du profil concerner la même propriété ;
- pour transmettre les données correctionnelles $\beta$ à au moins un véhicule $f_k$ dans le peloton de véhicules.

**2.** Système (1) selon la revendication 1, qui comprend la génération d'un signal correctionnel qui indique les données correctionnelles $\beta$, et pour transmettre le signal correctionnel à au moins un véhicule $f_k$ dans le peloton de véhicules.

**3.** Système (1) selon la revendication 1 ou 2, dans lequel le véhicule $f_k$ comprend une unité cartographique (6) avec des données cartographiques existantes et une unité de commande (7) qui est configurée pour effectuer au moins une des corrections de données cartographiques existantes dans le véhicule $f_k$ conformément aux données correctionnelles $\beta$ et pour générer des données cartographiques corrigées $\theta_k$, et la correction de la spécification de position du véhicule $f_k$, selon les données correctionnelles $\beta$ et pour générer une position corrigée $P_{corrk}$ pour le véhicule $f_k$.

**4.** Système (1) selon l'une quelconque des revendications précédentes, dans lequel le véhicule $f_k$ comprend une unité de commande (7) qui est configurée pour corriger une stratégie de conduite existante pour le véhicule $f_k$ conformément aux données correctionnelles $\beta$, pour déterminer une stratégie de conduite corrigée $\varphi_k$ pour le véhicule $f_k$, et pour générer un signal de stratégie de conduite qui décrit la stratégie de conduite corrigée $\varphi_k$.

**5.** Système (1) selon l'une quelconque des revendications précédentes, qui est configuré pour déterminer les données correctionnelles $\beta$ pour chacun de plusieurs véhicules dans le peloton de véhicules, pour comparer les ensembles pertinents de données correctionnelles les uns aux autres et pour déterminer les données correctionnelles de supervision $\beta_{sup}$ sur base du résultat de la comparaison.

**6.** Système (1) selon l'une quelconque des revendications précédentes, qui comprend :

- une unité qui est configurée pour déterminer un paramètre d'état VPF qui décrit la propriété actuelle de la route actuelle et pour générer un signal qui indique le paramètre d'état VPF ; où l'unité d'analyse (5) est configurée pour déterminer les données correctionnelles $\beta$ via :

- la détermination d'une PV de position pour le paramètre d'état VPF de la route actuelle,
- la détermination d'une position $PH_j$ pour l'emplacement dans le profil auquel la route selon les données cartographiques se comporte essentiellement en fonction du paramètre d'état VPF ;
- la détermination d'une différence ΔP entre les positions PV et PH$_j$ ;
- la détermination des données correctionnelles β sur base également de la différence ΔP.

7. Système (1) selon la revendication 6, dans lequel l'unité d'analyse (5) est configurée pour déterminer les données correctionnelles β via également :

- l'identification de la propriété VPHi du profil sur la position PH$_j$ qui a été déterminée ;
- la détermination d'une différence ΔVP entre VPF et HPV$_i$,
- le calcul des données correctionnelles β sur base également de la différence ΔVP.

8. Système (1) selon l'une quelconque des revendications précédentes, dans lequel une propriété est l'un quelconque d'un α gradient ou d'un rayon de courbure r.

9. Système (1) selon l'une quelconque des revendications 1 à 7, dans lequel l'unité de profil (4) est configurée pour :

- déterminer un profil pour le véhicule qui contient au moins une propriété indirecte de la route devant sur base d'un comportement dynamique prévu du véhicule le long de la route devant, dans lequel l'unité d'analyse (5) est configurée pour :

- déterminer au moins une propriété indirecte actuelle de la route devant sur base d'un comportement dynamique actuel du véhicule ; et pour :
- déterminer les données correctionnelles β sur base d'au moins une propriété indirecte actuelle de la route devant et au moins une propriété indirecte du profil.

10. Système (1) selon la revendication 9, dans lequel une propriété indirecte est l'une quelconque d'une vitesse v ou d'une accélération a.

11. Procédé pour un peloton de véhicules qui comprend au moins un véhicule de tête et un véhicule supplémentaire, chacun d'eux a une unité de positionnement (2) et une unité (3) pour une communication sans fil, dans lequel le système comprend :

- déterminer un profil pour au moins un véhicule dans le peloton de véhicules avec l'aide de données de position et de données cartographiques pour une route devant, lequel profil contient au moins une propriété de la route devant ;
**caractérisé en ce qu'il :**
- déterminer au moins une propriété actuelle de la route devant ;
- déterminer les données correctionnelles β sur base de l'au moins une propriété actuelle de la route devant et de l'au moins une propriété du profil, où la propriété actuelle et l'au moins une propriété du profil concernent la même propriété ;
- pour transmettre les données correctionnelles β à au moins un véhicule f$_k$ dans le peloton de véhicules.

12. Procédé selon la revendication 11, qui comprend que le véhicule f$_k$ corrige l'une ou les deux des données cartographiques existantes dans le véhicule f$_k$ et de la position du véhicule f$_k$, selon les données correctionnelles β.

13. Procédé selon la revendication 11 ou 12, qui comprend que le véhicule f$_k$ corrige une stratégie de conduite existante pour le véhicule f$_k$ selon les données correctionnelles β et détermine une stratégie de conduite corrigée φ$_k$, après quoi le véhicule f$_k$ est contrôlé selon la stratégie de conduite corrigée φ$_k$.

14. Procédé selon l'une quelconque des revendications 11 à 13, qui est configuré pour déterminer les données correctionnelles β pour chacun de plusieurs véhicules dans le peloton de véhicules, afin de comparer les ensembles pertinents de données correctionnelles les uns aux autres et pour déterminer les données correctionnelles de supervision β$_{sup}$ sur base du résultat de la comparaison.

15. Procédé selon l'une quelconque des revendications 11 à 14, qui comprend la détermination des données correctionnelles β par :

- la détermination d'un paramètre d'état VPF qui décrit la propriété actuelle de la route actuelle ;

- la détermination d'une position PV pour le paramètre d'état VPF de la route actuelle,
- la détermination d'une position $PH_j$ pour l'emplacement dans le profil auquel la route selon les données cartographiques se comporte essentiellement en fonction du paramètre d'état VPF ;
- la détermination d'une différence $\Delta P$ entre les positions PV et $PH_j$ ;
- la détermination des données correctionnelles $\beta$ sur base de la différence $\Delta P$.

**16.** Procédé selon la revendication 15, qui comprend :

- identifier la propriété VPHi du profil sur la position $PH_j$ qui a été déterminée ;
- déterminer la différence $\Delta VP$ entre VPF et $VPH_i$ ;
- calculer les données correctionnelles $\beta$ sur base de la différence $\Delta VP$.

**17.** Procédé selon l'une quelconque des revendications 11 à 16, dans lequel une propriété est l'un quelconque d'un gradient $\alpha$ ou d'un rayon de courbure r.

**18.** Procédé selon l'une quelconque des revendications 11 à 16 qui comprend :

- déterminer un profil pour le véhicule qui contient au moins une propriété indirecte de la route devant sur base d'un comportement dynamique prévu du véhicule le long de la route devant ;
- déterminer au moins une propriété indirecte actuelle de la route devant sur base d'un comportement dynamique actuel du véhicule ;
- déterminer les données correctionnelles $\beta$ sur base de l'au moins une propriété indirecte actuelle de la route devant et de l'au moins une propriété indirecte du profil.

**19.** Procédé selon la revendication 18, dans lequel la propriété indirecte de la route devant est l'une quelconque d'une vitesse v ou d'une accélération a.

**20.** Programme informatique P, d'un système (1), dans lequel ledit programme informatique P comprend un code de programme pour amener l'unité de commande (8) à réaliser l'une quelconque des étapes selon les revendications 11 à 19.

**21.** Produit de programme informatique comprenant un code de programme stocké sur un support pouvant être lu par un ordinateur afin de réaliser les étapes du procédé selon l'une quelconque des revendications 11 à 19.

FIG. 1

FIG. 2

FIG. 3

VPH1, VPH2,    ...    VPHX,
PH1    PH2    PHY

FIG. 4

PV    VPF

$f_3$    $f_2$    $f_1$    $\alpha_1$

$\alpha_2$ ← VPH6

PH6    FIG. 5

$a_{lat1}$

$v_1$    $f_1$

VPF

$d_{1,2}$    $r$

$v_2$    $f_2$    PV

$d_{2,3}$

$v_3$    $f_3$

FIG. 6

$d_{3,4}$

$v_4$    $f_4$

A1 — DETERMINE A PROFILE FOR AT LEAST ONE VEHICLE IN THE VEHICLE PLATOON

A2 — DETERMINE AT LEAST ONE ACTUAL PROPERTY OF THE ROAD AHEAD

A3 — DETERMINE A CORRECTIONAL PARAMETER β BASED ON THE ACTUAL PROPERTY AND A PROPERTY IN THE PROFILE

A4 — PASS THE CORRECTIONAL PARAMETER β TO AT LEAST ONE VEHICLE IN THE VEHICLE PLATOON

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0884666 A1

- US 6032097 A

**Non-patent literature cited in the description**

- **E. HELLSTRÖM.** Look-ahead control of heavy vehicles. Linköping University, 2010